# EUROPÄISCHE PATENTANMELDUNG

(11) **EP 4 175 076 A1**
(43) Veröffentlichungstag der Anmeldung: **03.05.2023**
(21) Anmeldenummer: 21204927.4
(22) Anmeldetag: 27.10.2021
(51) Int. Cl.: H01R 13/52, H01R 13/506, H01R 13/58

(54) **GEHÄUSEKOMPONENTE FÜR EINEN STECKVERBINDER, STECKVERBINDER UND STECKVERBINDERANORDNUNG**

(71) Anmelder: Rosenberger Hochfrequenztechnik GmbH & Co. KG, 83413 Fridolfing (DE)
(72) Erfinder: Niepalla, Tomasz, 83342 Tacherting (DE); Auer, Martin, 84558 Tyrlaching (DE); Beicht, Andreas, 84489 Burghausen (DE)
(74) Vertreter: Lorenz, Matthias

(57) **Zusammenfassung**

Die Erfindung betrifft eine Gehäusekomponente (10) für einen Steckverbinder (2), insbesondere eine Abschlusskappe für ein Steckverbindergehäuse (6), aufweisend einen kabelseitigen axialen Abschnitt (11) und einen sich entlang einer Längsachse (L) an den kabelseitigen Abschnitt (11) anschließenden, steckerseitigen axialen Abschnitt (12). In dem kabelseitigen Abschnitt (11) ist eine entlang der Längsachse (L) verlaufende Kabeldurchführung (13) für ein Kabel (3) ausgebildet. Es ist vorgesehen, dass die Gehäusekomponente (10) wenigstens einen in der Kabeldurchführung (13) verlaufenden, zu dem Kabel (3) hin offenen Fluidkanal (14) aufweist, um ein zwischen die Kabeldurchführung (13) und das Kabel (3) eingedrungenes Fluid definiert in den steckerseitigen Abschnitt (12) abzuleiten. Der Fluidkanal (14) windet sich zumindest abschnittsweise entlang der Längsachse (L) durch die Kabeldurchführung (13) hindurch. In dem steckerseitigen Abschnitt (12) ist wenigstens eine Austrittsöffnung (20) ausgebildet, um das Fluid quer zu der Längsachse (L) aus der Gehäusekomponente (10) auszuleiten.

## Beschreibung

Die Erfindung betrifft eine Gehäusekomponente für einen Steckverbinder, insbesondere eine Abschlusskappe für ein Steckverbindergehäuse, aufweisend einen kabelseitigen axialen Abschnitt mit einer Kabeldurchführung für ein Kabel und einen steckerseitigen axialen Abschnitt, gemäß dem Oberbegriff der Ansprüche 1 und 15.

Die Erfindung betrifft außerdem einen Steckverbinder, aufweisend eine Gehäusekomponente und wenigstens ein Dichtungselement.

Die Erfindung betrifft ferner eine Steckverbinderanordnung, aufweisend einen Steckverbinder und ein in den Steckverbinder mündendes Kabel.

Aus der Elektrotechnik sind diverse optische und elektrische Steckverbinder bekannt. Steckverbinder dienen bekanntermaßen dazu, Versorgungssignale und/oder Datensignale an korrespondierende Gegensteckverbinder zu übertragen.

An die Robustheit und Sicherheit von Steckverbindern werden mitunter hohe Anforderungen gestellt. Vor diesen Hintergrund gilt es insbesondere auch sicherzustellen, dass der Steckverbinder gegen das Eindringen von Flüssigkeiten ausreichend geschützt ist. Insbesondere Steckverbinder die in Fahrzeugen eingesetzt werden, sind besonders häufig widrigen Umgebungsbedingungen ausgesetzt und bilden zudem in der Regel auch eine sicherheitskritische Komponente für den Betrieb des Fahrzeugs. Beispielsweise werden Hochvoltsteckverbinder im Fahrzeugbereich bei Elektro- und/oder Hybridfahrzeugen eingesetzt, um eine Fahrzeugbatterie mit Ladestrom zu versorgen oder um die gespeicherte Energie aus der Batterie zu entnehmen und dem elektrischen Antrieb zuzuführen. Die elektrische Steckverbindung muss dabei dauerhaft und sicher ein Eindringen von Feuchtigkeit und Verunreinigungen verhindern und eine einwandfreie Übertragung hoher Ströme bei vorzugsweise geringer Transferimpedanz gewährleisten.

Insbesondere die Kabelzuführung des Kabels in den Innenraum des Steckverbinders stellt bei der Abdichtung häufig eine Schwachstelle dar, weshalb in diesem Bereich besonders hohe Dichtungsanforderungen gelten können. In der Regel kommen im Bereich der Kabelzuführung auf das Kabel aufgebrachte Dichtungselemente in Kombination mit Abschlusskappen zum Einsatz. Um eine ausreichende Dichtwirkung zu erreichen, werden mitunter hochkomplexe, aufwändig zu fertigende und zu umständlich montierbare Dichtungselemente eingesetzt, wie beispielsweise in der JP 2017-027712 A vorgeschlagen. Ferner benötigen die bekannten Dichtungssysteme vergleichsweise viel axialen Bauraum, was je nach Einsatzzweck nicht immer tolerierbar ist.

In Anbetracht des bekannten Stands der Technik besteht die Aufgabe der vorliegenden Erfindung darin, eine Gehäusekomponente für einen Steckverbinder bereitzustellen, die mit einfachen Mitteln eine Dichtungsfunktion in der Kabelzuführung des Steckverbinders bereitzustellen vermag, vorzugsweise in Kombination mit einem Dichtungselement, und insbesondere mit geringem Bauraumbedarf.

Der vorliegenden Erfindung liegt auch die Aufgabe zugrunde, einen Steckverbinder mit einer Gehäusekomponente bereitzustellen, die mit einfachen Mitteln eine Dichtungsfunktion in der Kabelzuführung des Steckverbinders bereitzustellen vermag, vorzugsweise in Kombination mit einem Dichtungselement, und insbesondere mit geringem Bauraumbedarf.

Schließlich ist es auch Aufgabe der Erfindung, eine Steckverbinderanordnung bereitzustellen, mit einem Steckverbinder, der eine Gehäusekomponente aufweist, die mit einfachen Mitteln eine Dichtungsfunktion in der Kabelzuführung des Steckverbinders bereitzustellen vermag, vorzugsweise in Kombination mit einem Dichtungselement, und insbesondere mit geringem Bauraumbedarf.

Die Aufgabe wird für die Gehäusekomponente mit den in Anspruch 1 oder Anspruch 15 aufgeführten Merkmalen gelöst. Hinsichtlich des Steckverbinders wird die Aufgabe durch die Merkmale des Anspruchs 13 und betreffend die Steckverbinderanordnung durch Anspruch 14 gelöst.

Die abhängigen Ansprüche und die nachfolgend beschriebenen Merkmale betreffen vorteilhafte Ausführungsformen und Varianten der Erfindung.

Die Erfindung betrifft eine Gehäusekomponente für einen Steckverbinder.

Bei dem Steckverbinder kann es sich insbesondere um einen elektrischen Steckverbinder handeln. Die Erfindung kann sich aber auch für einen optischen Steckverbinder gut eignen. Besonders vorteilhaft eignet sich die Erfindung zur Verwendung mit einem elektrischen Steckverbinder für den Einsatz in einem Fahrzeug, beispielsweise in einem Kraftfahrzeug. Ganz besonders bevorzugt ist die Erfindung zur Verwendung mit einem Hochvoltsteckverbinder vorgesehen.

Bei der Gehäusekomponente kann es sich um eine beliebige Gehäusekomponente des Steckverbinders, insbesondere um eine Gehäusekomponente eines mehrteiligen Steckverbindergehäuses, gegebenenfalls aber sogar um ein einteiliges Steckverbindergehäuse oder einen Abschnitt eines einteiligen Steckverbindergehäuses, handeln. Vorzugsweise ist die Gehäusekomponente als Abschlusskappe eines mehrteiligen Steckverbindergehäuses ausgebildet.

Die Gehäusekomponente kann an dem kabelseitigen Ende des Steckverbinders bzw. des Steckverbindergehäuses angeordnet sein.

Die Gehäusekomponente kann abschnittsweise oder vollständig hülsenförmig bzw. hohlzylindrisch, ringförmig und/oder kappenförmig ausgebildet sein.

Die Gehäusekomponente kann vorzugsweise einteilig, gegebenenfalls aber auch mehrteilig ausgebildet sein.

Die Gehäusekomponente kann aus einem Kunststoff ausgebildet, und beispielsweise mittels eines Spritzgießverfahrens hergestellt sein. Als Kunststoffe kommen vorzugsweise Thermoplaste, Duroplaste und/oder Elastomere in Frage. Die Gehäusekomponente kann allerdings auch aus einem Metall ausgebildet sein, wie Aluminium oder Kupfer, und beispielsweise mittels eines Tiefziehverfahrens hergestellt sein.

Es kann vorgesehen sein, dass an die Gehäusekomponente entlang der Längsachse in Richtung auf das steckerseitige Ende des Steckverbinders ein nachfolgend noch beschriebenes Dichtungselement unmittelbar angrenzt, beispielsweise unmittelbar an der Gehäusekomponente anliegt oder in der Gehäusekomponente aufgenommen und vorzugsweise axial befestigt ist. Vorzugsweise weist die Gehäusekomponente eine Aufnahme und/oder eines oder mehrere Fixierungsmittel für das Dichtungselement auf.

Die Gehäusekomponente kann vorzugsweise vornehmlich rund ausgebildet sein. Grundsätzlich kann die Gehäusekomponente allerdings eine beliebige Querschnittsgeometrie aufweisen, beispielsweise auch eckig oder oval ausgebildet sein.

Das Kabel ist vorzugsweise nicht als Bestandteil der Gehäusekomponente zu verstehen, auch wenn vorstehend und nachfolgend mitunter beschrieben ist, dass das Kabel in der Kabeldurchführung aufgenommen ist. Grundsätzlich muss die beanspruchte Gehäusekomponente lediglich technisch geeignet sein, um mit einem entsprechenden Kabel verwendet zu werden. Gegebenenfalls kann das Kabel oder zumindest ein in den Steckverbinder bzw. in die Gehäusekomponente mündender Endabschnitt des Kabels aber auch als Bestandteil der Gehäusekomponente betrachtet werden.

Erfindungsgemäß ist vorgesehen, dass die Gehäusekomponente einen kabelseitigen axialen Abschnitt und einen sich entlang der Längsachse der Gehäusekomponente bzw. der Längsachse des Steckverbinders an den kabelseitigen Abschnitt anschließenden, steckerseitigen axialen Abschnitt aufweist. Der kabelseitige Abschnitt weist eine entlang der Längsachse verlaufende Kabeldurchführung für das Kabel auf.

Vorzugsweise schließt sich der steckerseitige Abschnitt unmittelbar, insbesondere einteilig, an den kabelseitigen Abschnitt an. Es kann aber auch vorgesehen sein, dass sich die Gehäusekomponente mehrteilig aus dem steckerseitigen Abschnitt und dem kabelseitigen Abschnitt zusammensetzt, wobei der steckerseitige Abschnitt dann vorzugsweise mit dem kabelseitigen Abschnitt zusammengefügt ist, insbesondere stoffschlüssig (z. B. verklebt oder verschweißt), kraftschlüssig (z. B. miteinander verpresst) und/oder formschlüssig (z. B. miteinander verrastet).

Insbesondere wenn die Gehäusekomponente in Kombination mit einem Dichtungselement verwendet wird, kann es sich bei dem steckerseitigen Abschnitt um den dichtungsnahen, der Dichtung zugewandten Abschnitt der Gehäusekomponente und bei dem kabelseitigen Abschnitt um den dichtungsfernen, von der Dichtung abgewandten Abschnitt der Gehäusekomponente handeln.

Die Kabeldurchführung erstreckt sich vollständig durch den kabelseitigen Abschnitt hindurch, vorzugsweise parallel zu der Längsachse, besonders bevorzugt koaxial zu der Längsachse. Bei der Kabeldurchführung handelt es sich vorzugsweise um eine Durchgangsbohrung.

Die Kabeldurchführung ist vorzugsweise an die Querschnittsgeometrie des Kabels angepasst und insbesondere rund ausgeformt, um runde Kabel aufzunehmen. Die Kabeldurchführung kann grundsätzlich allerdings auch oval oder sogar eckig ausgebildet sein. Vorzugsweise ist die Kabeldurchführung zur Aufnahme genau eines Kabels ausgebildet, wobei grundsätzlich aber auch vorgesehen sein kann, mehr als ein Kabel durch eine gemeinsame Kabeldurchführung hindurchzuführen. Der Innendurchmesser der Kabeldurchführung entspricht vorzugsweise dem Außendurchmesser des Kabels bzw. des Kabelmantels des Kabels, kann insbesondere im Rahmen von Toleranzen allerdings auch geringfügig größer oder geringfügig kleiner sein als der Außendurchmesser des Kabels.

Der Innendurchmesser der Kabeldurchführung kann beispielsweise 0,5 cm bis 3 cm, vorzugsweise 1 cm bis 2 cm, besonders bevorzugt ungefähr 1,5 cm betragen.

Es kann vorgesehen sein, dass die Gehäusekomponente in dem kabelseitigen Abschnitt mehrere Kabeldurchführungen aufweist, beispielsweise eine Kabeldurchführung für jedes in den Steckverbinder einzuführenden Kabels. Somit kann die Gehäusekomponente also beispielsweise genau eine Kabeldurchführung, genau zwei Kabeldurchführungen, genau drei Kabeldurchführungen, genau vier Kabeldurchführungen oder noch mehr Kabeldurchführungen aufweisen. Die Erfindung ist zur Vereinfachung nachfolgend im Wesentlichen mit einer einzigen Kabeldurchführung beschrieben, was allerdings nicht einschränkend zu verstehen ist. Alle nachfolgend beschriebenen Ausführungsformen und Weiterbildungen können grundsätzlich auch für den Einsatz mit mehreren Kabeln erweitert werden.

Erfindungsgemäß weist die Gehäusekomponente wenigstens einen in der Kabeldurchführung ausgebildeten, zu dem Kabel bzw. zu der Längsachse hin offenen Fluidkanal auf, um ein zwischen die Kabeldurchführung und das Kabel eingedrungenes Fluid (wenn also das Kabel durch die Kabeldurchführung hindurchgeführt ist) definiert in den steckerseitigen Abschnitt abzuleiten.

Bei einem Fluid kann es sich im Rahmen der Erfindung vorzugsweise um eine Flüssigkeit, wie Wasser oder Schmutzwasser, handeln. Es kann sich bei dem Fluid gegebenenfalls aber auch um ein Gas oder Gasgemisch handeln.

In der Regel vermag ein solches Fluid durch toleranzbedingte Spalte zwischen dem Kabel und der Kabeldurchführung vornehmlich parallel in Richtung des steckerseitigen Abschnitt in den Steckverbinder bzw. die Gehäusekomponente einzudringen. Durch den vorgeschlagenen Fluidkanal ist es möglich, das eindringende Fluid definiert in den steckerseitigen Abschnitt zu führen, also ausgehend von einer undefinierten oder im Wesentlichen parallel zu der Längsachse verlaufenden Fließrichtung definiert bzw. gezielt in Umfangsrichtung abzulenken.

Unter einem "definierten" Ableiten des Fluids ist vorliegend eine bewusste bzw. gezielte Ablenkung des Fluidstroms in Umfangsrichtung der Kabeldurchführung zu verstehen (durch eine entsprechend gezielte Gestaltung des Fluidkanals) - im Gegensatz zu einer unkontrollierbaren oder zufälligen Ablenkung des Fluidstroms, beispielsweise durch Unebenheiten des Kabels, der Innenmantelfläche oder aufgrund von Verschmutzungen in der Kabeldurchführung.

Der Fluidkanal kann einteilig mit der Gehäusekomponente ausgebildet sein. Es kann allerdings auch vorgesehen sein, dass der Fluidkanal oder eine Gruppe aus mehreren Fluidkanälen durch ein separates Bauteil oder durch eine separate Baugruppe ausgebildet ist bzw. sind, die entsprechend in die Kabeldurchführung eingefügt, insbesondere in der Kabeldurchführung befestigt ist. Bei dem separaten Bauteil oder der separaten Baugruppe kann es sich beispielsweise um einen in die Kabeldurchführung eingefügten Schlauch oder eine Innenhülse handeln.

In einer bevorzugten Ausgestaltung der Erfindung sind mehrere Fluidkanäle vorgesehen, die in Umfangsrichtung nebeneinander durch die Kabeldurchführung verlaufen, beispielsweise zwei Fluidkanäle, drei Fluidkanäle, vier Fluidkanäle, fünf Fluidkanäle, sechs Fluidkanäle, sieben Fluidkanäle, acht Fluidkanäle, neun Fluidkanäle, zehn Fluidkanäle oder noch mehr Fluidkanäle. Grundsätzlich kann allerdings auch bereits ein einziger Fluidkanal ausreichend sein.

Erfindungsgemäß windet sich der Fluidkanal zumindest abschnittsweise entlang der Längsachse durch die Kabeldurchführung.

Der Fluidkanal beschreibt entlang der Innenseite der Kabeldurchführung insbesondere einen gekrümmten bzw. bogenförmigen Verlauf. Vorzugsweise verläuft der Fluidkanal dabei in weniger als einer Windung, beispielsweise in weniger als eine halbe Windung oder noch weniger.

Erfindungsgemäß ist vorgesehen, dass die Gehäusekomponente in dem steckerseitigen Abschnitt wenigstens eine Austrittsöffnung aufweist, um das Fluid quer bzw. winkling (jedoch nicht unbedingt orthogonal) zu der Längsachse aus der Gehäusekomponente auszuleiten.

Die Austrittsöffnung kann eine beliebige Geometrie aufweisen, beispielsweise vornehmlich rund, vorzugsweise allerdings vornehmlich eckig ausgebildet sein.

Grundsätzlich kann eine einzige Austrittsöffnungen oder können genau zwei Austrittsöffnungen bereits ausreichend sein. Es können allerdings auch noch mehr Austrittsöffnungen vorgesehen sein, beispielsweise zwei, drei, vier, fünf, sechs oder noch mehr Austrittsöffnungen, die entlang des Umfangs der Gehäusekomponente verteilt angeordnet sind.

Durch die erfindungsgemäß vorgeschlagene Kombination eines in der Kabeldurchführung angeordneten Fluidkanals und der wenigstens einen Austrittsöffnung kann das eintretende Fluid zunächst abgelenkt und anschließend aus der Gehäusekomponente ausgeleitet werden. Hierdurch vermag die Gehäusekomponente eine dichtungsähnliche Wirkung bereitzustellen. Durch die vorgeschlagene Gehäusekomponente kann somit gegebenenfalls auf ein separates, herkömmliches Dichtungselement verzichtet oder ein deutlich weniger komplexes, insbesondere auch in Axialrichtung verkürztes Dichtungselement verwendet werden, da bereits die Gehäusekomponente selbst eine Dichtwirkung für den Steckverbinder bereitstellen kann.

Insbesondere kann eine Kombination der vorgeschlagenen Gehäusekomponente mit einem herkömmlichen Dichtungselement die Dichtwirkung des Steckverbinders in überraschendem Maß erhöhen. Einen derartiger Steckverbinder kann beispielsweise eine deutlich verbesserte Dichtwirkung gegenüber einem mit hohem Druck in die Gehäusekomponente eindringenden Fluidstrom bereitstellen und somit eine gute Dichtungswirkung gegenüber einem Hochdruckstrahl oder einem Dampfstrahl aufweisen.

Dadurch, dass das Fluid durch den Fluidkanal zumindest teilweise in Umfangsrichtung abgelenkt wird, kann bereits ein wesentlicher Teil des Fluidstroms durch die wenigstens eine Austrittsöffnung aus der Gehäusekomponente ausgelenkt werden, wodurch dieser Teil des Fluidstroms nicht mehr auf das Dichtungselement auftrifft. In der Regel wird dann zwar nach wie vor ein reduzierter Anteil der Fluidmenge auf das Dichtungselement auftreffen, bevor auch dieser Anteil aus der Gehäusekomponente austritt, dies erfolgt aber mit entsprechend reduzierten Druck, weshalb die Belastung auf das Dichtungselement deutlich geringer ist.

In einer vorteilhaften Weiterbildung der Erfindung kann vorgesehen sein, dass auf einer Innenmantelfläche der Kabeldurchführung zumindest eine Erhebung ausgebildet ist, um den wenigstens einen Fluidkanal auszubilden. Vorzugsweise windet sich die Erhebung hierzu zumindest abschnittsweise entlang der Längsachse durch die Kabeldurchführung.

Ein eintreffendes Fluid bzw. ein Fluidstrom kann vorteilhaft an der Erhebung oder an den Erhebungen gebrochen werden. Die Erhebungen vermögen daher einen in Fluidstromrichtung hinter der Gehäusekomponente oder hinter dem kabelseitigen Abschnitt der Gehäusekomponente angeordneten axialen Abschnitt vorteilhaft vor einem direkten Auftreffen des Fluidstroms zu schützen.

Bei der Erhebung kann es sich insbesondere um einen Steg oder um eine Rippe handeln. Vorzugsweise erstreckt sich der Steg bzw. die Rippe entlang der Längsachse vollständig bzw. unterbrechungsfrei durch die Kabeldurchführung. Es kann aber auch vorgesehen sein, dass die Erhebung als Stift oder als Rippensegment ausgebildet ist, wobei mehrere, eine gemeinsame Gruppe bildende Stifte und/oder Rippensegmente entlang der Längsachse hintereinander angeordnet sind (gegebenenfalls entlang der Längsachse und/oder in Umfangsrichtung voneinander beabstandet), so dass sich die Gesamtheit aller Stifte bzw. Rippensegmente der Gruppe durch die Kabeldurchführung windet.

Vorzugsweise sind mehrere Rippen, Stege, Stifte, Rippensegmente und/oder Gruppen von Stiften/Rippensegmenten in Umfangsrichtung in der Kabeldurchführung verteilt angeordnet (insbesondere voneinander beabstandet), um Begrenzungen für jeweilige Fluidkanäle auszubilden.

Vorzugsweise ist die zumindest eine Erhebung, beispielsweise die Rippe, einteilig mit der Gehäusekomponente ausgebildet. Die Erhebung kann daher beispielsweise im Rahmen eines gemeinsamen Herstellungsprozess unmittelbar in der Kabeldurchführung ausgebildet werden. Die wenigstens eine Erhebung kann allerdings auch durch ein separates Bauelement oder eine separate Baugruppe ausgebildet und anschließend in der Kabeldurchführung angebracht worden sein, beispielsweise formschlüssig, kraftschlüssig, insbesondere aber stoffschlüssig. Die Erhebung kann beispielsweise auf der Innenmantelfläche der Kabeldurchführung aufgespritzt sein.

Vorzugsweise ist die zumindest eine Erhebung aus einem Kunststoff ausgebildet, insbesondere aus demselben Kunststoff, aus dem auch die Gehäusekomponente ausgebildet ist. Die Erhebung kann allerdings auch selbst in der Art einer Dichtung ausgebildet sein, beispielsweise aus einem teilweise elastischen Material, wie Gummi oder Silikon. Insbesondere in diesem Fall kann es von Vorteil sein, die Erhebungen auf die Innenmantelfläche der Kabeldurchführung aufzuspritzen.

Gemäß einer Weiterbildung der Erfindung kann vorgesehen sein, dass der Innendurchmesser der Kabeldurchführung und/oder der wenigstens eine Fluidkanal ausgebildet sind, dass das Kabel auf dem Fluidkanal aufliegt (insbesondere auf den Erhebungen), wenn das Kabel in der Kabeldurchführung aufgenommen ist.

Es kann vorgesehen sein, dass das Kabel den Fluidkanal innenseitig, also in Richtung auf die Längsachse, abdichtet.

Wie vorstehend erwähnt, ist der Fluidkanal zu dem Kabel hin offen ausgebildet. Das Kabel kann somit den Fluidkanal begrenzen bzw. verschließen, insbesondere abdichten, wenn es in die Kabeldurchführung eingebracht ist. Dabei können sich die Erhebungen der Fluidkanäle in den Kabelmantel des Kabels eindrücken. Auf vorteilhafte Weise kann das Fluid somit ausschließlich oder zumindest im Wesentlichen nur durch die Fluidkanäle hindurch in den steckerseitigen Abschnitt fließen.

Aber auch wenn aufgrund von Fertigungstoleranzen zwischen dem Kabel und dem Fluidkanal bzw. zwischen dem Kabel und den Erhebungen des Fluidkanals ein zusätzlicher Spalt verbleibt, so ist dieser Spalt erwartungsgemäß um ein Vielfaches kleiner als der bewusst definierte Fluidkanal. Der vornehmliche Fluidfluss wird somit durch den Fluidkanal oder durch die Fluidkanäle erfolgen. Außerdem kommt es in diesem Fall erwartungsgemäß aufgrund des Bernoulli-Effektes zu einem Druckabbau und damit zu einem Verteilen / Versprühen des Fluids bei Austritt aus dem Spalt zwischen Kabel und Erhebungen, wodurch der negative Einfluss dieses unbeeinflussbaren Fluidflusses schließlich zu vernachlässigen sein kann.

Alternativ oder ergänzend zu einer Ausgestaltung der Fluidkanäle durch jeweilige Erhebungen kann in einer Ausgestaltung der Erfindung auch vorgesehen sein, dass der wenigstens eine Fluidkanal durch auf der Innenmantelfläche der Kabeldurchführung ausgebildete Vertiefungen, insbesondere durch sich entlang der Längsachse erstreckende Nuten, ausgebildet ist. Auch eine Kombination aus Nuten und Erhebungen kann vorgesehen sein, um den wenigstens einen Fluidkanal auszubilden.

Gemäß einer Weiterbildung der Erfindung kann vorgesehen sein, dass sich der wenigstens eine Fluidkanal derart durch die Kabeldurchführung hindurchwindet, dass eine direkte, einzig in Längsachsrichtung bzw. parallel zu der Längsachse verlaufende Passage für das Fluid durch den kabelseitigen Abschnitt zumindest gestört bzw. behindert, vorzugsweise vollständig blockiert ist.

Es kann beispielsweise vorgesehen sein, dass der steckerseitige Abschnitt (insbesondere ein in dem steckerseitigen Abschnitt angeordnetes Dichtungselement) in einer in Richtung auf den steckerseitigen Abschnitt gerichteten Draufsicht auf die Gehäusekomponente, also in einer Ansicht durch die Kabeldurchführung hindurch, vollständig oder zumindest im Wesentlichen verdeckt ist, wenn das Kabel in der Kabeldurchführung aufgenommen ist. Eine direkte Sichtverbindung und damit auch eine direkte Fluidverbindung von dem kabelseitigen Ende der Gehäusekomponente in den steckerseitigen Abschnitt hinein ist damit durch das Kabel und den Fluidkanal vorzugsweise vollständig blockiert.

Dadurch, dass eine direkte Passage für das Fluid blockiert ist, wird der Fluidstrom zwingend von seiner ursprünglichen, in der Regel geradlinigen Ausrichtung abgelenkt, was insbesondere die Resistenz des Steckverbinders gegenüber einem gerichteten Hochdruckfluidstrahl erhöhen kann. Auf diese Weise können Dampfstrahlresistenzen in Höhe von 80 bar oder mehr ermöglicht werden.

In einer Weiterbildung der Erfindung kann vorgesehen sein, dass sich der wenigstens eine Fluidkanal helixförmig durch die Kabeldurchführung hindurchwindet.

Ein helixförmiger Verlauf des Fluidkanals hat sich als besonders vorteilhaft herausgestellt, um das Fluid auf seinem Weg durch die Kabeldurchführung kontrolliert zu führen. Grundsätzlich kann der Verlauf des Fluidkanals durch die Kabeldurchführung allerdings beliebig sein, beispielsweise spiralförmig, schraubenförmig oder aber auch linear. Es kann ein kontinuierlicher oder gestufter Verlauf vorgesehen sein.

Es kann insbesondere eine helixförmige Anordnung von Erhebungen, insbesondere Rippen oder Rippensegmenten, auf der Innenmantelfläche vorgesehen sein.

In einer Weiterbildung der Erfindung kann vorgesehen sein, dass der steckerseitige Abschnitt zumindest bereichsweise wenigstens eine um die Längsachse umlaufende Außenwand aufweist, um zumindest bereichsweise einen Hohlraum einzugrenzen, wobei wenigstens einer der Fluidkanäle in den Hohlraum mündet.

Es können gegebenenfalls auch mehrere Hohlräume vorgesehen sein, beispielsweise durch Zwischenwandungen zumindest teilweise voneinander separierte Hohlräume, wobei sich die Fluidkanäle dann auf die verschiedenen Hohlräume aufteilen können. Beispielsweise kann dann jeweils einer der Fluidkanäle jeweils in genau einen der Hohlräume münden. In der Regel ist allerdings ein gemeinsamer Hohlraum für alle Fluidkanäle ausreichend.

Die Außenwand ist vorzugsweise einteilig mit der Gehäusekomponente ausgebildet. Die Außenwand kann allerdings auch als separates Bauteil oder als separate Baugruppe ausgebildet und mit der Gehäusekomponente bzw. mit dem steckerseitigen Abschnitt der Gehäusekomponente verbunden sein, insbesondere stoffschlüssig, kraftschlüssig und/oder formschlüssig verbunden sein. Die wenigstens eine Außenwand kann beispielsweise als separate Hülse oder als zumindest teilringförmiger Körper ausgebildet und mit dem steckerseitigen Abschnitt stirnseitig oder außenseitig verrastet oder verpresst sein.

Es kann genau eine Außenwand vorgesehen sein, gegebenenfalls können aber auch mehrere Außenwände vorgesehen sein, die entlang des Umfangs der Gehäusekomponente verteilt angeordnet sind, beispielsweise zwei Außenwände, drei Außenwände, vier Außenwände oder noch mehr Außenwände.

Die wenigstens eine Außenwand kann vorzugsweise Verbindungselemente zur Verbindung der Gehäusekomponente mit dem Steckverbindergehäuse des Steckverbinders und/oder mit einem Dichtungselement des Steckverbinders aufweisen, insbesondere Rastelemente, einen Gewindeabschnitt (beispielsweise ein Innengewinde oder ein Außengewinde) oder einen für eine Presspassung ausgebildeten Abschnitt. Derartige Verbindungselemente sind allerdings nicht unbedingt erforderlich, denn die Gehäusekomponente kann auch einteilig mit dem Steckverbindergehäuse des Steckverbinders ausgebildet sein.

In einer vorteilhaften Weiterbildung der Erfindung kann vorgesehen sein, dass die wenigstens eine Austrittsöffnung in der wenigstens einen Außenwand ausgebildet ist. Die Austrittsöffnung kann zum Beispiel als Fenster oder als Schlitz in der wenigstens einen Außenwand ausgebildet sein.

Alternativ oder zusätzlich kann die wenigstens eine Austrittsöffnung aber auch zwischen mehreren der genannten Außenwände ausgebildet sein.

In einer besonders bevorzugten Ausgestaltung können genau zwei, genau drei oder genau vier entlang des Umfangs der Gehäusekomponente voneinander beabstandete Außenwände vorgesehen sein, zwischen denen jeweilige Austrittsöffnungen ausgebildet sind.

In einer Weiterbildung der Erfindung kann vorgesehen sein, dass ein dem Fluid mittels des Hohlraums zur Verfügung gestelltes, steckerseitiges Volumen größer ist als ein dem Fluid in dem kabelseitigen Abschnitt zur Verfügung gestelltes, kabelseitiges Volumen.

Das kabelseitige Volumen ergibt sich in der Regel aus einem Abstand zwischen dem Kabelmantel des Kabels und der Innenmantelfläche der Kabeldurchführung, und insbesondere durch die Summe der durch die einzelnen Fluidkanäle bereitgestellten Einzelvolumina. Das in dem kabelseitigen Abschnitt für das Fluid bereitgestellte Volumen ergibt sich also auf Grundlage der einzelnen Strömungsquerschnitte der Fluidkanäle. Somit kann insbesondere durch die Höhe der wenigstens einen Erhebung auf der Innenmantelfläche der Kabeldurchführung das Einzelvolumen des entsprechenden Fluidkanals festgelegt werden - und damit auch das in dem kabelseitigen Abschnitt zur Verfügung gestellte, kabelseitige Volumen.

Dadurch, dass das steckerseitige Volumen in dem steckerseitigen Hohlraum größer ist als das kabelseitige Volumen, kommt es am Ende des wenigstens einen Fluidkanals durch die unmittelbare Volumenvergrößerung aufgrund des Bernoulli-Effektes zu einer plötzlichen Verringerung des Drucks in dem Fluid. Die Strömungsgeschwindigkeit des Fluids ist in dem kabelseitigen Abschnitt aufgrund des geringeren kabelseitigen Volumens deutlich größer als in dem steckerseitigen Abschnitt. Dies resultiert schließlich in einem Auffächern des Fluidstroms bzw. in einem Versprühen des Fluids bei Austritt aus dem wenigstens einen Fluidkanal, weshalb das Fluid weniger gezielt auf beispielsweise ein nachfolgendes Dichtungselement einwirkt. Eine ursprüngliche axiale Richtungskomponente des Fluids, die durch die Fluidkanäle bereits teilweise in Umfangsrichtung umgeleitet wurde, wird dadurch weiter reduziert bzw. auf diverse Richtungsvektoren verteilt.

In einer vorteilhaften Weiterbildung der Erfindung kann vorgesehen sein, dass der Innendurchmesser der Gehäusekomponente in dem steckerseitigen Abschnitt größer ist als der Innendurchmesser der Kabeldurchführung. Insbesondere kann vorgesehen sein, dass zwischen der Kabeldurchführung und der wenigstens einen Außenwand eine quer zu der Längsachse (aber nicht unbedingt orthogonal) verlaufende Abstützfläche ausgebildet ist.

Zwischen der wenigstens einen Außenwand und der Kabeldurchführung kann ein Absatz bzw. eine Stufe innerhalb der Gehäusekomponente vorgesehen sein, wodurch eine innere Stirnfläche ausgebildet wird. Diese vorliegend als "Abstützfläche" bezeichnete Fläche ist vorzugsweise ringförmig ausgebildet und verläuft um die Kabeldurchführung herum. Die wenigstens eine Außenwand ist vorzugsweise entlang des Außenumfangs der Abstützfläche angeordnet (insbesondere unmittelbar am äußeren Rand der Abstützfläche, gegebenenfalls aber auch von dem Rand beabstandet).

In einer vorteilhaften Weiterbildung der Erfindung kann vorgesehen sein, dass mehrere Stützelemente auf der Abstützfläche verteilt angeordnet sind, um ein an die Gehäusekomponente angrenzendes Dichtungselement des Steckverbinders mechanisch zu kontaktieren.

Vorzugsweise sind die Stützelemente gleichmäßig um die Kabeldurchführung verteilt angeordnet und voneinander beabstandet. Insbesondere können die Stützelemente äquidistant verteilt sein.

Die Stützelemente erheben sich vorzugsweise entlang der Längsachse, besonders bevorzugt parallel zu der Längsachse, aus der Abstützfläche. Die Stützelemente können beispielsweise in der Art von Stempeln, Stegen, Stiften oder sonstigen Strukturen ausgebildet sein. Die Stützelemente sind vorzugsweise einteilig aus der Gehäusekomponente ausgebildet.

Die Stützelemente können von der wenigstens einen Außenwand und/oder von der Kabeldurchführung beabstandet sein.

Die Stützelemente können zur Fixierung des optionalen Dichtungselements verwendet werden (insbesondere zur axialen Fixierung / Abstützung entlang der Längsachse). Mittels der Stützelemente kann beispielsweise eine mechanische Kraft auf das Dichtungselement ausgeübt werden, wenn die Gehäusekomponente auf dem Steckverbindergehäuse montiert ist, um durch axiale Kompression des Dichtungselements eine radiale Ausdehnung desselben zu bewirken, um die Dichtungsfunktion zu unterstützen.

Vorzugsweise ist in den Stützelementen und/oder zwischen den Stützelementen jeweils wenigstens ein Zwischenkanal ausgebildet, in den jeweils wenigstens einer der Fluidkanäle mündet.

Beispielsweise können Ausnehmungen, wie Fenster oder Schlitze, in den Stützelementen vorgesehen sein, um den Zwischenkanal auszubilden. Vorzugsweise sind die Zwischenkanäle allerdings zwischen den einzelnen Stützelementen ausgebildet.

Die Fluidkanäle können derart in die Zwischenkanäle münden, dass sich der dem Fluid zur Verfügung gestellte Pfad entsprechend von den Fluidkanälen durch die Zwischenkanäle verlängert, um anschließend zu den Austrittsöffnungen zu verlaufen.

Die Anzahl Zwischenkanäle kann vorzugsweise der Anzahl Fluidkanäle entsprechen. Es können aber auch beispielsweise weniger Zwischenkanäle als Fluidkanäle vorgesehen sein - oder umgekehrt. Es können also auch mehrere Fluidkanäle in einen gemeinsamen Zwischenkanal münden.

In einer vorteilhaften Weiterbildung der Erfindung kann vorgesehen sein, dass der wenigstens eine Fluidkanal an einem steckerseitigen Endabschnitt einen zumindest im Wesentlichen parallel zu der Längsachse verlaufenden Umlenkabschnitt aufweist, um das Fluid ausgehend von dem Fluidkanal gezielt in einen der Zwischenkanäle einzuleiten.

Vorzugsweise sind die Umlenkabschnitte einteilig mit den die Fluidkanäle ausbildenden Strukturen gebildet, also beispielsweise einteilig mit den Erhebungen (zum Beispiel den Rippen oder Rippensegmenten) ausgebildet. Der Fluidkanal kann am Übergang zu dem Umlenkabschnitt einen Knick aufweisen.

Die Umlenkabschnitte können besonders vorteilhaft sein, wenn die einzelnen Stützelemente auf der Abstützfläche von der Kabeldurchführung beabstandet sind. Die Umlenkabschnitte können dann insbesondere verhindern, dass die durch die Fluidkanäle separierten, einzelnen Fluidströme wieder zusammenfließen.

In einer Weiterbildung der Erfindung kann vorgesehen sein, dass zwischen der wenigstens einen Außenwand und den Stützelementen ein um die Stützelemente umlaufender Außenkanal ausgebildet ist, in den die einzelnen Zwischenkanäle münden, und der ausgebildet ist, das Fluid zu der wenigstens einen Austrittsöffnung zu leiten.

Ein gemeinsamer Außenkanal kann besonders vorteilhaft sein, um das über die Fluidkanäle und die Zwischenkanäle geleitete Fluid bis zu den Austrittsöffnungen zu führen. Ein ringförmiger Außenkanal kann insbesondere vorteilhaft sein, wenn weniger Austrittsöffnungen vorgesehen sind als Fluidkanäle und/oder Zwischenkanäle. Somit können die einzelnen Fluidströme in dem Außenkanal zusammengeführt und gemeinsam aus der Austrittsöffnung ausgeleitet werden.

Die Erfindung betrifft auch einen Steckverbinder, aufweisend die Gehäusekomponente gemäß den vorstehenden und nachfolgenden Ausführungen und wenigstens ein entlang der Längsachse an den steckerseitigen Abschnitt der Gehäusekomponente angrenzendes oder in dem steckerseitigen Abschnitt angeordnetes, außenseitig auf dem Kabel montierbares Dichtungselement.

Der erfindungsgemäße Steckverbinder kann besonders vorteilhaft innerhalb eines Fahrzeugs, insbesondere eines Kraftfahrzeugs, verwendet werden. Mögliche Einsatzgebiete sind insbesondere Hochvoltsteckverbinder für die E-Mobility. Auch Datensteckverbinder, beispielsweise für autonomes Fahren, Fahrer-Assistenz-Systeme oder Navigationssysteme können allerdings vorgesehen sein. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge. Der erfindungsgemäße Steckverbinder eignet sich grundsätzlich aber für beliebige Anwendungen innerhalb der gesamten Elektrotechnik und ist nicht auf den Einsatz in der Fahrzeugtechnik oder der Hochvolttechnik beschränkt zu verstehen. Insbesondere kann der Steckverbinder auch als Steckverbinder für die Hochfrequenztechnik ausgebildet sein.

Bei dem Dichtungselement kann es sich insbesondere um ein herkömmliches Dichtungselement eines Steckverbinders handeln, beispielsweise um ein ringförmiges Dichtungselement, das auf einen Kabelmantel des Kabels aufbringbar ist. Das Dichtungselement kann beispielsweise als Profildichtung ausgebildet sein und eine oder mehrere Dichtlippen aufweisen, die kabelseitig bzw. innenseitig und/oder steckerseitig bzw. außenseitig ausgebildet sind.

Das Kabel ist vorzugsweise nicht Teil des erfindungsgemäßen Steckverbinders, allerdings vorteilhaft zusammen mit dem Steckverbinder verwendbar.

Durch die vorgeschlagene Kombination aus Gehäusekomponente und Dichtungselement kann eine besonders vorteilhafte Dichtwirkung erzielt werden, ohne dass das Dichtungselement an sich verbessert oder verstärkt werden müsste. Es kann somit ein herkömmliches Dichtungselement in unveränderter Form verwendet werden, um die Dichtwirkung in Zusammenwirkung mit der Gehäusekomponente zu verbessern. Durch die vorgeschlagene Gehäusekomponente kann auf vorteilhafte Weise beispielsweise ein Teil eines Hochdruckwasserstrahls von dem Dichtungselements abgelenkt werden, wodurch einzig ein Fluidstrom bzw. Wasserstrahl mit einem reduzierten Druck auf das Dichtungselement auftrifft, der von dem Dichtungselement sicher abgewehrt werden kann.

Durch die vorgeschlagenen Fluidkanäle können einzelne Durchführungen für das Fluid gebildet werden, so dass das Fluid in mehrere Einzelkanäle bzw. Einzelströme aufgeteilt und insbesondere von einer axialen Strömungsrichtung (entlang bzw. parallel zu der Längsachse) in eine Strömungsrichtung in Umfangsrichtung abgelenkt wird. Vorzugsweise weist der Fluidstrom somit bei Austritt aus den einzelnen Fluidkanälen nicht mehr ausschließlich eine axiale Strömungskomponente, sondern auch eine Strömungskomponente in Umfangsrichtung auf.

Durch die in der Gehäusekomponente vorgesehenen Austrittsöffnungen kann der auf diese Weise beeinflusste Fluidstrom lateral aus der Gehäusekomponente und damit aus dem Steckverbinder austreten. Der verbleibende Druck und die verbleibende Menge des Fluids, die auf das Dichtungselement einwirken, sind damit deutlich reduziert.

Vorzugsweise verläuft der Fluidkanal spiralförmig oder helixförmig durch die Kabeldurchführung der Gehäusekomponente.

Die Fluidkanäle können außerdem die Montierbarkeit des Kabels in der Kabeldurchführung leichtgängiger gestalten.

Die Erfindung betrifft auch eine Steckverbinderanordnung, aufweisend einen Steckverbinder gemäß den vorstehenden und nachfolgenden Ausführungen, und das besagte Kabel.

Auf vorteilhafte Weise kann das Steckverbindergehäuse unter Verwendung der vorgeschlagenen Gehäusekomponente in Längsrichtung verkürzt sein. Insbesondere kann dadurch eine kompakte Abschlusskappe mit hoher Dampfstrahlresistenz bereitgestellt werden. Im Gegensatz zum Stand der Technik, bei dem bei derartigen Abschlusskappen der Kappendom zur Erzielung einer ausreichenden Dampfstrahlresistenz und/oder ein Dichtungselement in Axialrichtung verlängert werden müssen, können durch die vorgeschlagene Erfindung Bauraum und damit insbesondere auch Material und Kosten bei der Herstellung des Steckverbinders eingespart werden.

Bei dem Kabel handelt es sich vorzugsweise um ein elektrisches Kabel (Datenkabel zur Datenübertragung und/oder Versorgungskabel zur elektrischen Energieversorgung). Besonders bevorzugt ist ein elektrisches Kabel zur Übertragung hoher Ströme mit Spannungen bis zu 1.500 Volt oder mehr vorgesehen. Es kann allerdings auch ein optisches Kabel vorgesehen sein.

Vorzugsweise ist ein koaxiales Kabel vorgesehen.

Vorzugsweise weist das Kabel zumindest einen Innenleiter und einen Kabelmantel auf. Grundsätzlich kann das Kabel allerdings auch mehr als einen Innenleiter aufweisen, beispielsweise zwei, drei, vier oder noch mehr Innenleiter. Das Kabel kann außerdem einen Außenleiter aufweisen, beispielsweise einen Außenleiterschirm, wie ein Kabelschirmgeflecht. Optional kann das Kabel außerdem eine Kabelfolie aufweisen. Auf die spezifische Ausgestaltung des Kabels kommt es grundsätzlich nicht an.

Unter dem Begriff "Kabel" kann im Rahmen der Erfindung gegebenenfalls auch eine Einzelleitung (Innenleiter und eine den Innenleiter umhüllende Isolation) einer mehrere derartige Einzelleitungen aufweisenden, mehradrigen Leitung verstanden werden. Die Erfindung kann sich daher auch zur Abdichtung beispielsweise eines Kontaktteileträgers eignen, in den eine oder mehrere Einzelleitungen zur Verbindung mit jeweiligen Kontaktelementen eingeführt werden. In der Regel wird der Steckverbinder aber bereits im Bereich der Kabelzuführung abgedichtet, weshalb eine separate Abdichtung der Einzelleitungen nicht mehr erforderlich ist.

Es können auch mehrere Kabel vorgesehen sein, die in einen gemeinsamen Steckverbinder eingeführt werden. Die Kabel können durch eine gemeinsame Gehäusekomponente oder durch eine jeweilige Gehäusekomponenten hindurchgeführt werden. Insofern mehrere Kabel durch eine gemeinsame Gehäusekomponente hindurchgeführt werden, können die Kabel durch eine gemeinsame Kabeldurchführung oder durch eine jeweilige Kabeldurchführung in der Gehäusekomponente geführt sein.

Die Erfindung betrifft auch eine alternative Gehäusekomponente für einen Steckverbinder, insbesondere eine Abschlusskappe für ein Steckverbindergehäuse, aufweisend einen kabelseitigen axialen Abschnitt und einen sich entlang einer Längsachse an den kabelseitigen Abschnitt anschließenden, steckerseitigen axialen Abschnitt, wobei der kabelseitige Abschnitt eine entlang der Längsachse verlaufende Kabeldurchführung für ein Kabel aufweist. Bezüglich dieser alternativen Gehäusekomponente ist vorgesehen, dass ein kabelseitiges Volumen für ein zwischen die Kabeldurchführung und das Kabel eingedrungenes Fluid in dem kabelseitigen Abschnitt kleiner ist als ein dem Fluid in dem steckerseitigen Abschnitt zur Verfügung gestelltes, steckerseitiges Volumen, und wobei in dem steckerseitigen Abschnitt wenigstens eine Austrittsöffnung ausgebildet ist, um das Fluid quer zu der Längsachse aus der Gehäusekomponente auszuleiten.

Die vorstehend genannte Gehäusekomponente (also die Gehäusekomponente gemäß Anspruch 15) wird nachfolgend aus Gründen der Unterscheidbarkeit von der Gehäusekomponente des Anspruchs 1 mitunter als "alternative Gehäusekomponente" bezeichnet. Es sei jedoch betont, dass sich die vorstehenden und nachfolgenden Angaben in der Beschreibung, den Ansprüchen und den Figuren auf die Gehäusekomponente des Anspruchs 1 und auf die "alternative Gehäusekomponente" des Anspruch 15 gleichermaßen beziehen können, sofern nichts Gegenteiliges angegeben ist. Dies gilt insbesondere (aber nicht ausschließlich) betreffend Merkmale und Vorteile der Fluidkanäle, der Außenwände und der Stützelemente. Beispielsweise können also die von Patentanspruch 1 abhängigen Patentansprüche auch entsprechende Weiterbildungen des Patentanspruch 15 darstellen. Insbesondere auch der kennzeichnende Teil des Anspruchs 1 kann eine Weiterbildung des Patentanspruchs 15 darstellen.

Die alternative Gehäusekomponente stellt eine Alternativlösung für die einheitliche erfindungsgemäße Aufgabe dar, die vorliegend zweckmäßigerweise separat wiedergegeben wird. Die beiden Gehäusekomponenten stehen dahingehend miteinander in Beziehung, dass sichergestellt ist, dass ein in die Kabeldurchführung eingetretenes Fluid in dem steckerseitigen Abschnitt nur noch eine abgeschwächte Wirkung in axialer Richtung entlang der Längsachse entfaltet, und daher besonders einfach aus den seitlich angeordneten Austrittsöffnungen ausgeleitet werden kann.

Dadurch, dass das Fluid ausgehend von einem geringen Volumen in ein größeres Volumen fließt, reduziert sich der Druck in dem Medium, wodurch das Fluid besonders gut durch die Abflussöffnungen abgeführt werden kann, ohne ein nachfolgendes Dichtungselement wesentlich zu belasten.

Die Erfindung betrifft auch eine Steckverbindung, aufweisend den vorstehend und nachfolgend beschriebenen Steckverbinder und einen Gegensteckverbinder.

Merkmale, die im Zusammenhang mit einem der Gegenstände der Erfindung, namentlich gegeben durch eine der erfindungsgemäßen Gehäusekomponenten, den Steckverbinder, die Steckverbindung oder die Steckverbinderanordnung beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters miteinschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erfindungsgemäße Steckverbinderanordnung in einer geschnittenen Seitenansicht, mit einem Steckverbinder, der eine als Abschlusskappe ausgebildete Gehäusekomponente gemäß einem ersten Ausführungsbeispiel der Erfindung, sowie ein elektrisches Kabel aufweist;
- Figur 2: die Gehäusekomponente gemäß Figur 1 in einer perspektivischen Einzeldarstellung;
- Figur 3: eine Gehäusekomponente gemäß einem zweiten Ausführungsbeispiel der Erfindung in einer perspektivischen Einzeldarstellung; und
- Figur 4: die alternative Gehäusekomponente der Erfindung in einer perspektivischen Einzeldarstellung.

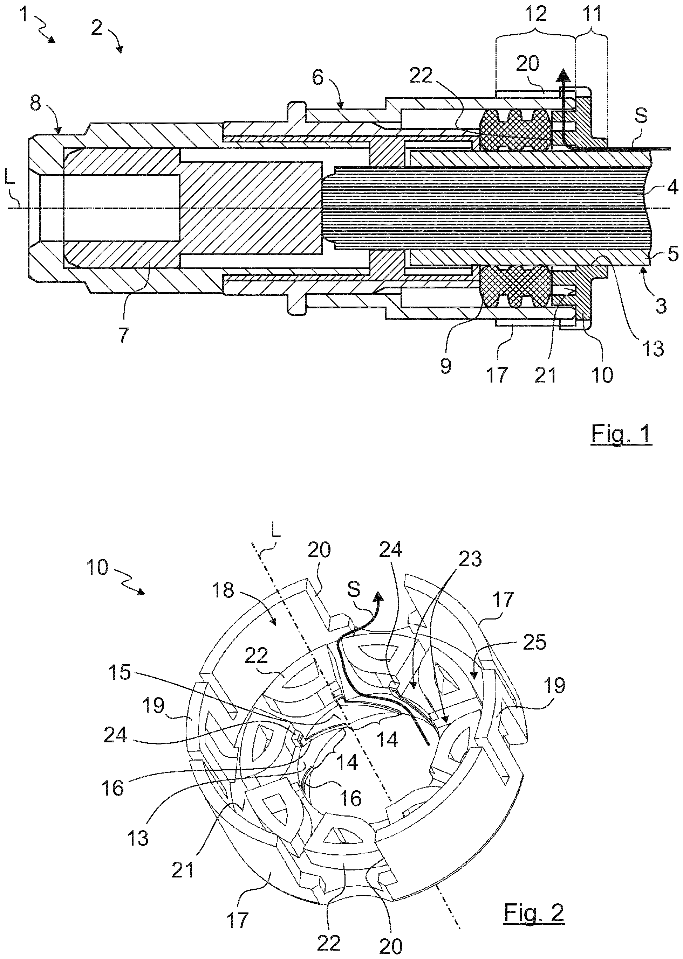

In Figur 1 ist beispielhaft und schematisiert eine erfindungsgemäße Steckverbinderanordnung 1 in einer seitlichen Schnittdarstellung gezeigt. Die Steckverbinderanordnung 1 weist einen Steckverbinder 2 und ein Kabel 3 auf. Im Ausführungsbeispiel sind ein elektrischer Steckverbinder 2 und ein elektrisches Kabel 3 dargestellt, dies ist allerdings nicht einschränkend zu verstehen.

Das Kabel 3 weist einen Innenleiter 4 und einen Kabelmantel 5 auf, wobei grundsätzlich beliebige Kabelarten vorgesehen sein können, also beispielsweise auch Kabel mit mehreren Innenleitern, verschiedenen Dielektrika und/oder Außenleitern (z. B. einem Kabelschirmgeflecht und/oder einer Kabelfolie). Das Kabel 3 ist ausgehend von einem kabelseitigen Ende eines mehrteiligen Steckverbindergehäuses 6 in den Steckverbinder 2 eingeführt. In einem mittleren Abschnitt des Steckverbinders 2 ist der Innenleiter 4 des Kabels 3 mit einem Kontaktelement 7 des Steckverbinders 2 verbunden, beispielsweise stoffschlüssig verschweißt. Ferner weist der Steckverbinder 2 ein steckerseitiges Ende mit einem Steckinterface 8 zur Verbindung mit einem korrespondierenden Gegensteckverbinder (nicht dargestellt) auf.

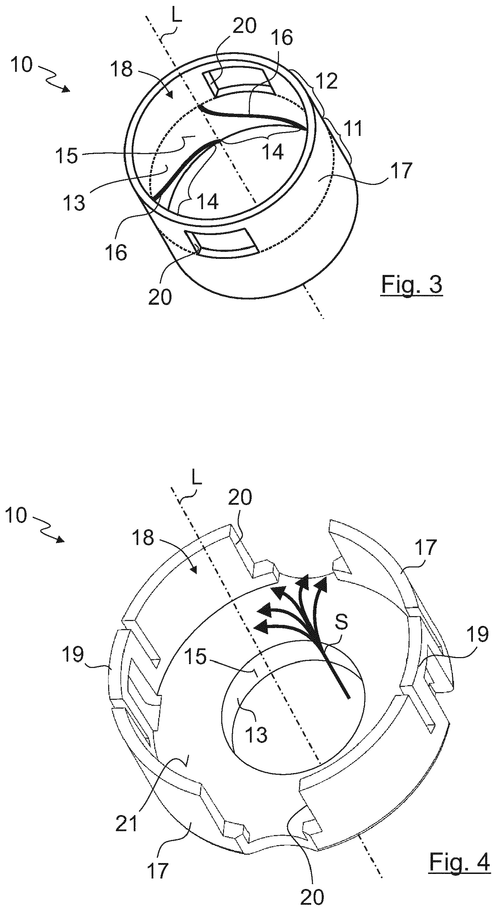

Außerdem umfasst der Steckverbinder 2 ein außenseitig auf dem Kabelmantel 5 montiertes Dichtungselement 9, das von einer als Abschlusskappe ausgebildeten Gehäusekomponente 10 am kabelseitigen Ende des Steckverbindergehäuses 6 axial fixiert wird. Die in Figur 1 schematisch gezeigte Gehäusekomponente 10 ist in Figur 2 in einer perspektivischen Einzeldarstellung dargestellt. Figur 3 zeigt ein weiteres Ausführungsbeispiel, das nachfolgend zusammen mit dem ersten Ausführungsbeispiel erläutert wird.

Die Gehäusekomponente 10 weist einen kabelseitigen axialen Abschnitt 11 (vgl. Figur 1) und einen sich entlang der Längsachse L an den kabelseitigen Abschnitt 11 anschließenden, steckerseitigen axialen Abschnitt 12 (vgl. Figur 1) auf. In dem kabelseitigen Abschnitt 11 ist eine entlang der Längsachse L verlaufende Kabeldurchführung 13 für das Kabel 3 ausgebildet. Die Kabeldurchführung 13 ist möglichst passgenau an den Außendurchmesser des Kabels 3 angepasst.

Bei der in den Figuren 1 bis 3 dargestellten Gehäusekomponente 10 weist die Kabeldurchführung 13 mehrere zu dem Kabel 3 hin offene Fluidkanäle 14 (vgl. insbesondere die Figuren 2 und 3) auf, um ein zwischen die Kabeldurchführung 13 und das Kabel 3 eingedrungenes Fluid (nicht dargestellt) definiert in den steckerseitigen Abschnitt 12 abzuleiten. Die Fluidkanäle 14 winden sich zumindest abschnittsweise entlang der Längsachse L durch die Kabeldurchführung 13, wobei vorzugsweise weniger als eine Windung pro Fluidkanal 14 vorgesehen ist.

Es ist vorzugsweise vorgesehen, dass sich die Fluidkanäle 14 derart durch die Kabeldurchführung 13 hindurchwinden, dass eine direkte Passage für das Fluid, also insbesondere eine Passage, die einzig parallel zu der Längsachse L verläuft, durch den kabelseitigen Abschnitt 11 hindurch bis in den steckerseitigen Abschnitt 12 hinein blockiert ist. Diesbezüglich hat sich insbesondere ein helixförmiger Verlauf der Fluidkanäle 14 als vorteilhaft herausgestellt, wie in den Figuren 2 und 3 angedeutet.

Zur Ausbildung der einzelnen Fluidkanäle 14 sind auf einer Innenmantelfläche 15 der Kabeldurchführung 13 Erhebungen 16 in der Art von Rippen ausgebildet. Der Innendurchmesser der Kabeldurchführung 13 und die Höhe der Erhebungen 16 bzw. die Fluidkanäle 14 sind ausgebildet, dass das Kabel 3 auf den Fluidkanälen 14 aufliegt und die Fluidkanäle 14 innenseitig, also in Richtung auf die Längsachse L, abdichtet.

Zwischen dem Kabelmantel 5 des Kabels 3 und der Innenmantelfläche 15 der Kabeldurchführung 13 kann das kabelseitige Volumen auf Grundlage der einzelnen Strömungsquerschnitte der Fluidkanäle 14 bereitgestellt werden. Der gesamte kabelseitige Strömungsquerschnitt, der das kabelseitige Volumen in dem kabelseitigen Abschnitt 11 definiert, kann somit insbesondere durch Modifikation der Erhebungen 16 vorteilhaft beeinflusst werden.

Wie sich anhand des in Figur 2 dargestellten, beispielhaften Strömungsverlaufs S ergibt, wird das Fluid auf seinem Weg durch die Kabeldurchführung 13 definiert abgelenkt und weist bei seinem Austritt aus dem kabelseitigen Abschnitt 11 neben einer axialen Bewegungskomponente auch eine in Umfangsrichtung gerichtete Bewegungskomponente auf, was die Belastung für das nachfolgende Dichtungselement 9 deutlich verringert.

Der steckerseitige Abschnitt 12 weist zumindest bereichsweise um die Längsachse L umlaufend angeordnete Außenwände 17 auf. In dem Ausführungsbeispiel der Figuren 1 und 2 sind genau zwei Außenwände 17 vorgesehen, die gemeinsam zumindest bereichsweise einen Hohlraum 18 in dem steckerseitigen Abschnitt 12 eingrenzen, in den die Fluidkanäle 14 münden. Dabei ist das dem Fluid mittels des Hohlraums 18 zur Verfügung gestellte, steckerseitige Volumen deutlich größer als das dem Fluid in dem kabelseitigen Abschnitt 11 zur Verfügung gestellte, kabelseitige Volumen. Auf diese Weise findet bei Eintritt des Fluids in den steckerseitigen Abschnitt 12 ein Druckverlust statt, da die Fließgeschwindigkeit des Fluids in den Fluidkanälen 14 aufgrund des deutlich geringeren Volumens höher ist. Auf diese Weise kommt es zu einem gewissen Versprühen des Fluids bei Eintritt in den steckerseitigen Abschnitt 12, was die Belastung auf das Dichtungselement 9 weiter verringert.

Optional können in den Außenwänden 17 Verbindungselemente vorgesehen sein, beispielsweise Rastelemente 19, um mit einer weiteren Komponente des Steckverbindergehäuses 6 zu verrasten.

Schließlich kann das Fluid in dem steckerseitigen Abschnitt 12 durch entsprechende Austrittsöffnungen 20 quer zu der Längsachse L aus der Gehäusekomponente 10 ausgeleitet werden. In dem Ausführungsbeispiel der Figuren 1 und 2 sind die Austrittsöffnungen 20 zwischen den einzelnen Außenwänden 17 ausgebildet.

Alternativ oder zusätzlich können die Austrittsöffnungen 20 allerdings auch innerhalb der Außenwände 17 ausgebildet sein, beispielsweise in der Art eines Fensters oder eines Schlitzes. Beispielhaft ist in Figur 3 ein weiteres Ausführungsbeispiel einer erfindungsgemäßen Gehäusekomponente 10 dargestellt, bei dem lediglich eine einzige Außenwand 17 vorgesehen ist, in der entsprechende Fenster zur Ausbildung der Austrittsöffnungen 20 vorgesehen sind.

In dem Ausführungsbeispiel der Figuren 1 und 2 ist der Innendurchmesser der Gehäusekomponente 10 in dem steckerseitigen Abschnitt 12 größer als in der Kabeldurchführung 13, weshalb zwischen der Kabeldurchführung 13 und der wenigstens einen Außenwand 17 eine quer zu der Längsachse L verlaufende Abstützfläche 21 ausgebildet ist.

Eine Abstützfläche 21 ist allerdings nicht unbedingt erforderlich, was beispielhaft anhand des in Figur 3 dargestellten Ausführungsbeispiels verdeutlicht wird. In dem in Figur 3 dargestellten Ausführungsbeispiel entspricht der Innendurchmesser der Gehäusekomponente 10 in dem steckerseitigen Abschnitt 12 dem Innendurchmesser in der Kabeldurchführung 13. Die Gehäusekomponente 10 ist daher in Figur 3 vollständig hülsenförmig ausgebildet - im Gegensatz zu der in Figur 2 dargestellten, kappenförmigen Gehäusekomponente 10.

Eine Vergrößerung des Innendurchmessers gemäß den Figuren 1 und 2 hat sich als besonders geeignet herausgestellt, um den Druck des Fluids in dem steckerseitigen Hohlraum aufgrund des Bernoulli-Effekts besonders stark zu verringern.

Optional können auf der Abstützfläche 21, wie in den Figuren 1 und 2 dargestellt, mehrere Stützelemente 22 verteilt angeordnet sein. Die Stützelemente 22 sind vorzugsweise gleichmäßig um die Kabeldurchführung 13 herum angeordnet. Mittels der Stützelemente 22 vermag die Gehäusekomponente 10 das Dichtungselement 9 mechanisch zu kontaktieren und daher axial zu fixieren bzw. abzustützen. Die Stützelemente 22 sind in dem Ausführungsbeispiel in der Art von Stempeln einteilig aus der Gehäusekomponente 10 ausgeformt.

Zwischen den Stützelementen 22 sind jeweilige Zwischenkanäle 23 ausgebildet, in die jeweils einer der Fluidkanäle 14 mündet. Auf diese Weise kann das Fluid trotz der Stützelemente 22 weiterhin vorteilhaft und vergleichsweise direkt aus der Gehäusekomponente 10 lateral ausgeleitet werden. Alternativ oder zusätzlich zu Zwischenkanälen 23 zwischen den Stützelementen 22 können auch Zwischenkanäle 23 vorgesehen sein, die sich durch die einzelnen Stützelemente 22 hindurch erstrecken (in den Ausführungsbeispielen nicht dargestellt).

Es hat sich als vorteilhaft herausgestellt, an einem steckerseitigen Endabschnitt der Fluidkanäle 14 bzw. der Erhebungen 16 parallel zu der Längsachse L verlaufende Umlenkabschnitte 24 vorzusehen, um das Fluid ausgehend von dem Fluidkanal 14 noch gezielter in die Zwischenkanäle 23 einzuleiten. Dies ist insbesondere von Vorteil, wenn die Stützelemente 22 auf der Abstützfläche 21 von der Kabeldurchführung 13 beabstandet sind, wie dargestellt.

Zwischen den Außenwänden 17 und den Stützelementen 22 kann ein um die Stützelemente 22 umlaufender Außenkanal 25 ausgebildet sein, wie in Figur 2 erkennbar. Die einzelnen Zwischenkanäle 23 können in den gemeinsamen Außenkanal 25 münden, um das Fluid gesammelt aus den Austrittsöffnungen 20 auszuleiten.

Zur Verdeutlichung, dass im Rahmen des erfinderischen Gesamtkonzepts auch eine alternative Gehäusekomponente 10 vorgesehen sein kann, ist in Figur 4 wiederum eine Abschlusskappe für ein Steckverbindergehäuse 6 dargestellt, die einen kabelseitigen Abschnitt 11 und einen sich entlang der Längsachse L an den kabelseitigen Abschnitt 11 anschließenden, steckerseitigen Abschnitt 12 aufweist. Wiederum ist in dem kabelseitigen Abschnitt 11 eine entlang der Längsachse L verlaufende Kabeldurchführung 13 für das Kabel 3 vorgesehen.

Im Gegensatz zu der in den Figuren 1 bis 3 beschriebenen Gehäusekomponente 10 weist die alternative Gehäusekomponente 10 der Figur 4 allerdings keine Fluidkanäle 14 auf, sondern bedient sich einer anderen, ebenfalls vorteilhaften Strategie, um die Auswirkung des Fluidstroms auf das Dichtungselement 9 in dem steckerseitigen Abschnitt 12 zu reduzieren.

Gemäß der alternativen Gehäusekomponente 10 ist vorgesehen, dass das dem Fluid in dem steckerseitigen Abschnitt 12 zur Verfügung gestellte, steckerseitige Volumen größer ist als das Volumen in dem kabelseitigen Abschnitt 11. Dies kann beispielsweise dadurch gewährleistet sein, dass das Volumen in dem von der wenigstens einen Außenwand 17 eingeschlossenen Hohlraum 18 in dem steckerseitigen Abschnitt 12 deutlich größer ausgebildet ist als ein toleranzbedingtes Volumen zwischen der Innenmantelfläche 15 der Kabeldurchführung 13 und dem Kabelmantel 5 des Kabels 3. Auf diese Weise kommt es bei Eintreten des Fluids in den steckerseitigen Abschnitt 12 zu einem Versprühen des Fluids (vgl. den in Figur 4 beispielhaft angedeuteten Strömungsverlauf S) und damit zu einer deutlichen Druckverminderung. Schließlich kann das Fluid durch die in der Gehäusekomponente 10 ausgebildeten Austrittsöffnungen 20 quer zu der Längsachse L aus der Gehäusekomponente 10 austreten.

## Patentansprüche

1. Gehäusekomponente (10) für einen Steckverbinder (2), insbesondere Abschlusskappe für ein Steckverbindergehäuse (6), aufweisend einen kabelseitigen axialen Abschnitt (11) und einen sich entlang einer Längsachse (L) an den kabelseitigen Abschnitt (11) anschließenden, steckerseitigen axialen Abschnitt (12), wobei der kabelseitige Abschnitt (11) eine entlang der Längsachse (L) verlaufende Kabeldurchführung (13) für ein Kabel (3) aufweist,
**gekennzeichnet durch**
wenigstens einen in der Kabeldurchführung (13) ausgebildeten, zu dem Kabel (3) hin offenen Fluidkanal (14), um ein zwischen die Kabeldurchführung (13) und das Kabel (3) eingedrungenes Fluid definiert in den steckerseitigen Abschnitt (12) abzuleiten, wobei sich der Fluidkanal (14) zumindest abschnittsweise entlang der Längsachse (L) durch die Kabeldurchführung (13) hindurchwindet, und wobei in dem steckerseitigen Abschnitt (12) wenigstens eine Austrittsöffnung (20) ausgebildet ist, um das Fluid quer zu der Längsachse (L) aus der Gehäusekomponente (10) auszuleiten.

2. Gehäusekomponente (10) nach Anspruch 1,
**dadurch gekennzeichnet, dass**
auf einer Innenmantelfläche (15) der Kabeldurchführung (13) zumindest eine Erhebung (16) ausgebildet ist, insbesondere eine Rippe, die sich zumindest abschnittsweise entlang der Längsachse (L) durch die Kabeldurchführung (13) hindurchwindet, um den wenigstens einen Fluidkanal (14) auszubilden.

3. Gehäusekomponente (10) nach Anspruch 1 oder 2,
**dadurch gekennzeichnet, dass**
der wenigstens eine Fluidkanal (14) derart ausgebildet ist, dass das Kabel (3) auf dem Fluidkanal (14) aufzuliegen vermag, um den Fluidkanal (14) innenseitig, in Richtung auf die Längsachse (L), abzudichten.

4. Gehäusekomponente (10) nach einem der Ansprüche 1 bis 3,
**dadurch gekennzeichnet, dass**
sich der wenigstens eine Fluidkanal (14) derart durch die Kabeldurchführung (13) hindurchwindet, dass eine direkte, einzig in Längsachsrichtung verlaufende Passage für das Fluid durch den kabelseitigen Abschnitt (11) hindurch bis in den steckerseitigen Abschnitt (12) hinein blockiert ist.

5. Gehäusekomponente (10) nach einem der Ansprüche 1 bis 4,
**dadurch gekennzeichnet, dass**
sich der wenigstens eine Fluidkanal (14) helixförmig durch die Kabeldurchführung (13) hindurchwindet.

6. Gehäusekomponente (10) nach einem der Ansprüche 1 bis 5,
**dadurch gekennzeichnet, dass**
der steckerseitige Abschnitt (12) zumindest bereichsweise wenigstens eine um die Längsachse (L) umlaufende Außenwand (17) aufweist, um zumindest bereichsweise einen Hohlraum (18) einzugrenzen, wobei der wenigstens eine Fluidkanal (14) in den Hohlraum (18) mündet.

7. Gehäusekomponente (10) nach Anspruch 6,
**dadurch gekennzeichnet, dass**
die wenigstens eine Austrittsöffnung (20) in der wenigstens einen Außenwand (17) und/oder zwischen mehreren der genannten Außenwände (17) ausgebildet ist.

8. Gehäusekomponente (10) nach Anspruch 6 oder 7,
**dadurch gekennzeichnet, dass**
ein dem Fluid mittels des Hohlraums (18) zur Verfügung gestelltes, steckerseitiges Volumen größer ist als ein dem Fluid in dem kabelseitigen Abschnitt (11) zur Verfügung gestelltes, kabelseitiges Volumen.

9. Gehäusekomponente (10) nach einem der Ansprüche 6 bis 8,
**dadurch gekennzeichnet, dass**
der Innendurchmesser der Gehäusekomponente (10) in dem steckerseitigen Abschnitt (12) größer ist als in der Kabeldurchführung (13), wobei zwischen der Kabeldurchführung (13) und der wenigstens einen Außenwand (17) eine quer zu der Längsachse (L) verlaufende Abstützfläche (21) ausgebildet ist.

10. Gehäusekomponente (10) nach Anspruch 9,
**dadurch gekennzeichnet, dass**
mehrere Stützelemente (22) auf der Abstützfläche (21) verteilt angeordnet sind, vorzugsweise gleichmäßig um die Kabeldurchführung (13) verteilt, um ein an die Gehäusekomponente (10) angrenzendes Dichtungselement (9) des Steckverbinders (2) mechanisch zu kontaktieren, wobei in den Stützelementen (22) und/oder zwischen den Stützelementen (22) jeweils wenigstens ein Zwischenkanal (23) ausgebildet ist, in den jeweils wenigstens einer der Fluidkanäle (14) mündet.

11. Gehäusekomponente (10) nach Anspruch 10,
**dadurch gekennzeichnet, dass**
der wenigstens eine Fluidkanal (14) an einem steckerseitigen Endabschnitt einen zumindest im Wesentlichen parallel zu der Längsachse (L) verlaufenden Umlenkabschnitt (24) aufweist, um das Fluid ausgehend von dem Fluidkanal (14) gezielt in einen der Zwischenkanäle (23) einzuleiten.

12. Gehäusekomponente (10) nach Anspruch 10 oder 11,
**dadurch gekennzeichnet, dass**
zwischen der wenigstens einen Außenwand (17) und den Stützelementen (22) ein um die Stützelemente (22) umlaufender Außenkanal (25) ausgebildet ist, in den die einzelnen Zwischenkanäle (23) münden, und der ausgebildet ist, das Fluid zu der wenigstens einen Austrittsöffnung (20) zu leiten.

13. Steckverbinder (2), aufweisend die Gehäusekomponente (10) gemäß einem der Ansprüche 1 bis 12 und wenigstens ein entlang der Längsachse (L) an den steckerseitigen Abschnitt (12) der Gehäusekomponente (10) angrenzendes oder in dem steckerseitigen Abschnitt (12) angeordnetes, außenseitig auf dem Kabel (3) montierbares Dichtungselement (9).

14. Steckverbinderanordnung (1), aufweisend einen Steckverbinder (2) gemäß Anspruch 13 und das Kabel (3).

15. Gehäusekomponente (10) für einen Steckverbinder (2), insbesondere Abschlusskappe für ein Steckverbindergehäuse (6), aufweisend einen kabelseitigen axialen Abschnitt (11) und einen sich entlang einer Längsachse (L) an den kabelseitigen Abschnitt (11) anschließenden, steckerseitigen axialen Abschnitt (12), wobei der kabelseitige Abschnitt (11) eine entlang der Längsachse (L) verlaufende Kabeldurchführung (13) für ein Kabel (3) aufweist,
**dadurch gekennzeichnet, dass**
ein kabelseitiges Volumen für ein zwischen die Kabeldurchführung (13) und das Kabel (3) eingedrungenes Fluid in dem kabelseitigen Abschnitt (12) kleiner ist als ein dem Fluid in dem steckerseitigen Abschnitt (11) zur Verfügung gestelltes, steckerseitiges Volumen, und wobei in dem steckerseitigen Abschnitt (12) wenigstens eine Austrittsöffnung (20) ausgebildet ist, um das Fluid quer zu der Längsachse (L) aus der Gehäusekomponente (10) auszuleiten.
